# FASCICULE DE BREVET EUROPEEN

(11) **EP 0 747 256 B1**
(45) Date de publication et mention de la délivrance du brevet: **19.01.2000**
(21) Numéro de dépôt: 96401225.6
(22) Date de dépôt: 07.06.1996
(51) Int. Cl.: B60N 2/06, B60N 2/14, B60N 2/42, B64D 11/06

(54) **Siège orientable de sécurité pour un véhicule tel qu'un aéronef**
Drehbarer Sicherheitsitz
Swiveling safety seat for a vehicle such as an airplane

(30) Priorité: 09.06.1995 FR 9506837
(43) Date de publication de la demande: 11.12.1996
(73) Titulaire: AEROSPATIALE Société Nationale Industrielle, 75781 Paris Cédex 16 (FR)
(72) Inventeur: Cecinas, Laurent, 17300 Rochefort (FR)
(74) Mandataire: Dubois-Chabert, Guy

(56) Documents cités:
- EP-A- 0 054 880
- DE-A- 3 540 486
- FR-A- 2 450 172
- GB-A- 2 009 881
- US-A- 3 741 511
- US-A- 4 846 529
- PATENT ABSTRACTS OF JAPAN vol. 017, no. 414 (M-1456), 3 Août 1993 & JP-A-05 085243 (SHIROKI CORP), 6 Avril 1993,

## Description

### Domaine technique

L'invention concerne un siège orientable conçu pour équiper un véhicule tel qu'un aéronef, une autocaravane ou similaire.

Plus précisément, l'invention concerne un siège orientable particulièrement adapté pour être utilisé sur un avion d'affaire sans que le caractère orientable du siège n'affecte la sécurité des passagers.

### Etat de la technique

Il est de plus en plus fréquent d'équiper certains véhicules tels que les avions d'affaire de fauteuils conçus pour pouvoir être réglés à volonté d'avant en arrière, latéralement et en rotation.

Pour commander les déplacements du fauteuil, le passager dispose alors d'un organe tel qu'un levier ou une manette, dont l'actionnement libère des moyens de blocage débrayables, par lesquels l'assise du fauteuil est normalement immobilisée sur une embase fixée sur le plancher de l'avion ou sur des rails montées sur ce plancher.

Selon une première technique connue, les moyens de blocage débrayables comprennent un mécanisme autorisant deux translations, respectivement selon une direction longitudinale et selon une direction transversale par rapport à l'avion et une rotation autour d'un axe perpendiculaire au plan défini par les deux directions précédentes. Cet axe de rotation est normalement vertical lorsque l'avion est au sol.

Lorsque l'organe de réglage n'est pas manoeuvré, des organes de blocage par exemple en forme de peignes sont maintenus élastiquement en prise sur deux crémaillères disposées selon les deux directions de déplacement en translation et sur une roue dentée centrée sur l'axe de pivotement. Lorsqu'il est actionné, l'organe de réglage agit simultanément sur ces trois organes de blocage par un système de câbles, de façon à les effacer des crémaillères et de la roue dentée. Il est alors possible au passager de déplacer son fauteuil comme il le souhaite par rapport à l'embase fixe, dans les limites des courses disponibles. Il est à noter que l'ensemble peignes-crémaillères-roue dentée est parfois remplacé par des mécanismes équivalents du type pions-perforations ou à friction.

Une autre technique connue, décrite par exemple dans l'un quelconque des documents US-A-4 588 226, US-A-4 671 572 et US-A-4 756 502 (correspondant au préambule de la revendication indépendante), consiste à équiper l'assise du fauteuil d'un fourreau orienté vers le bas et traversant des ouvertures formées dans le plateau supérieur de l'embase qui la supporte et dans un plateau intermédiaire placé sous l'embase. Une colonne, montée coulissante dans le fourreau, porte à son extrémité inférieure une plaque de freinage placée en dessous du plateau intermédiaire. Des moyens élastiques sollicitent normalement la colonne vers le haut, de façon telle que la plaque de freinage soit maintenue en contact de friction avec la plaque intermédiaire, elle-même en contact de friction avec la face inférieure du plateau supérieur de l'embase.

Lorsque l'organe de réglage est manoeuvré par l'occupant, la colonne est déplacée vers le bas dans le fourreau par un système de came entraîné par un câble, de telle sorte que le contact de friction entre la plaque de freinage et le plateau supérieur de l'embase est interrompu. Un déplacement du fauteuil dans une direction horizontale quelconque et en rotation devient donc possible, dans les limites des courses définies par les ouvertures formées dans le plateau supérieur de l'embase et dans le plateau intermédiaire. Habituellement, l'ouverture formée dans le plateau de l'embase présente une forme carrée ou rectangulaire.

Dans une variante de cette deuxième technique, illustrée par le document US-A-4 625 934, le fourreau est remplacé par une colonne sur laquelle coulissent directement, avec interdiction de rotation, deux plaques d'embrayage placées de part et d'autre du plateau supérieur de l'embase. Des ressorts maintiennent normalement les plaques d'embrayage en prise contre le plateau. La manoeuvre de l'organe de réglage commande l'écartement des plaques d'embrayage et autorise, par conséquent, le réglage du siège.

Ces deux techniques connues permettent de modifier la position et l'orientation d'un fauteuil d'avion dans un plan horizontal, dans des limites fixées par le constructeur. Cependant, elles présentent l'une et l'autre des lacunes en matière de sécurité.

Ainsi, si un accident entraîne le vrillage du plancher, ce vrillage risque d'être répercuté en totalité à l'embase du siège, ce qui peut se traduire par une déformation, voire un échappement de l'assise qu'elle supporte, lorsque les réglages de la position et de l'orientation du fauteuil sont assurés en débrayant une plaque de freinage. En outre, dans ce dernier cas, un choc violent risque d'entraîner un déplacement non contrôlé de l'assise par rapport à l'embase fixe, qui peut être très dangereux pour l'occupant du siège.

Dans le document FR-A-2 450 172, il est proposé un siège de tracteur agricole, dont le support est conçu pour permettre de régler le siège en inclinaison, en le faisant pivoter autour d'un axe longitudinal, ou en orientation, en le faisant pivoter autour d'un axe vertical. Dans les deux cas, il est prévu d'immobiliser le siège dans des positions d'indexage matérialisées par la pénétration d'ergots dans des trous. Les articulations ne sont pas conçues pour préserver l'intégrité du siège en cas d'accident.

### Exposé de l'invention

L'invention a pour objet un siège orientable pour un véhicule tel qu'un aéronef, ou autre, dont la conception lui permet d'éviter qu'un vrillage du plancher inférieur à certaines limites (par exemple, plus ou moins 10° dans deux directions orthogonales) n'entraîne une déformation de l'embase et, par conséquent, un risque de déformation ou d'échappement de l'assise, quels que soient les moyens de blocage débrayables permettant d'orienter le siège.

Conformément à l'invention, ce résultat est obtenu au moyen d'un siège orientable pour véhicule, comprenant :
- une embase pourvue d'un plateau supérieur et d'au moins une pièce inférieure portant le plateau supérieur et prévue pour être fixée à une structure support du véhicule ;
- au moins une assise reposant sur le plateau supérieur de l'embase ; et
- des moyens de blocage débrayables par lesquels l'assise est normalement immobilisée sur l'embase et dont un actionnement autorise des déplacements de l'assise parallèlement au plateau supérieur ;
caractérisé par le fait que l'embase comprend au moins deux pièces inférieures reliées au plateau supérieur par des moyens d'articulation définissant deux axes d'articulation sensiblement orthogonaux entre eux, orientés parallèlement au plateau supérieur, un premier de ces moyens d'articulation, qui définit un premier des axes d'articulation, étant placé sensiblement au sommet d'un triangle dont le côté opposé est confondu avec le deuxième axe d'articulation.

Dans une forme de réalisation préférentielle de l'invention, le premier axe d'articulation est orienté selon une direction sensiblement transversale par rapport au véhicule et le deuxième axe d'articulation est orienté selon une direction sensiblement longitudinale par rapport au véhicule.

Lorsque la structure support du véhicule comprend deux rails de fixation parallèles, chacun des moyens d'articulation est placé avantageusement à proximité de l'un de ces rails.

Dans ce cas, lorsque le plateau supérieur comporte deux bords droits latéraux, orientés selon ladite direction sensiblement longitudinale, un premier de ces bords est relié à une première des pièces inférieures par le premier moyen d'articulation, et le deuxième bord du plateau supérieur est relié à la deuxième pièce inférieure par le deuxième moyen d'articulation.

De façon plus précise, le premier bord droit latéral du plateau supérieur comporte alors, de préférence, un rebord longitudinal en saillie vers le bas, par lequel ce premier bord droit est relié à la première pièce inférieure au travers du premier moyen d'articulation. Dans ce cas, la première pièce inférieure est placée en dessous du rebord longitudinal et délimite avec ce dernier un jeu qui autorise un pivotement prédéterminé du plateau supérieur autour du premier axe d'articulation.

Par ailleurs, la deuxième pièce inférieure comporte de préférence un bord supérieur droit, orienté selon la direction sensiblement longitudinale et relié au deuxième bord droit latéral du plateau supérieur par le deuxième moyen d'articulation.

Dans la forme de réalisation préférentielle de l'invention, les moyens de blocage débrayables sont simplifiés et comprennent :
- un fourreau solidaire de l'assise et faisant saillie vers le bas au travers d'une ouverture formée dans le plateau supérieur ;
- une colonne montée coulissante dans le fourreau ;
- une seule plaque de freinage solidaire d'une extrémité basse de la colonne, en dessous du plateau supérieur ;
- des moyens élastiques interposés entre le fourreau et la colonne, de façon à presser directement la plaque de freinage contre une face inférieure du plateau supérieur ; et
- des moyens de commande par came, dont un actionnement déplace la colonne vers le bas dans le fourreau, à l'encontre des moyens élastiques.

Les risques de déplacement incontrôlés de l'assise du siège en cas de choc sont alors évités par le fait que l'ouverture formée dans le plateau supérieur comporte une partie principale de réglage, prolongée latéralement, le long d'un bord arrière, par un appendice comportant un bord avant orienté selon une direction sensiblement transversale par rapport au véhicule. En plaçant le fourreau dans cet appendice, lors des périodes à risques telles que l'atterrissage et le décollage sur un aéronef, on lui assure un appui vers l'avant, qui évite les déplacements incontrôlés de l'assise.

De préférence, le bord avant de l'appendice comporte alors une zone de moindre résistance autorisant un encastrement du fourreau dans le bord avant, en cas de choc du véhicule contre un obstacle.

Dans la forme de réalisation préférentielle de l'invention, la zone de moindre résistance comprend une cloison séparant le bord avant de l'appendice d'une lumière traversant le plateau supérieur, à l'avant de cet appendice.

Comme on l'a déjà mentionné, le siège selon l'invention est particulièrement adapté pour être utilisé sur un aéronef, même si d'autres applications sont possibles.

### Brève description des dessins

On décrira à présent, à titre d'exemple non limitatif, une forme de réalisation préférentielle de l'invention, en se référant aux dessins annexés, dans lesquels :
- la figure 1 est une vue en perspective qui représente en trait plein l'embase d'un fauteuil orientable conforme à l'invention, dont l'assise est illustrée schématiquement en traits mixtes ;
- la figure 2 est une vue en coupe verticale qui illustre plus en détail les moyens de blocage débrayables équipant le fauteuil orientable de la figure 1 ; et
- la figure 3 est une vue de dessus représentant à plus grande échelle la partie du plateau supérieur de l'embase du fauteuil, dans laquelle est réalisée l'ouverture associée aux moyens de blocage débrayables illustrés sur la figure 2.

### Exposé détaillé d'un mode de réalisation

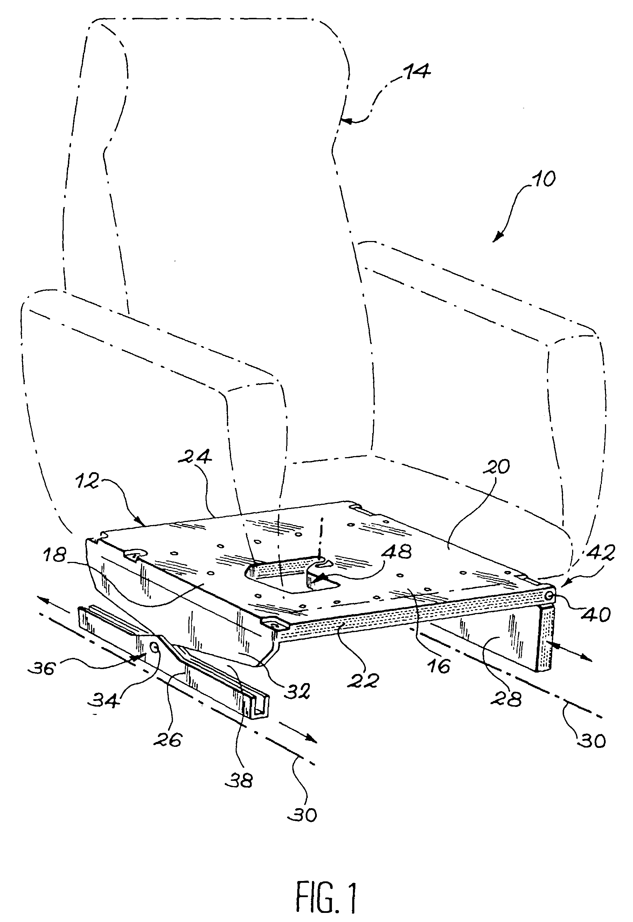

Sur la figure 1, la référence 10 désigne de façon générale un fauteuil destiné à équiper un véhicule tel qu'un avion d'affaire.

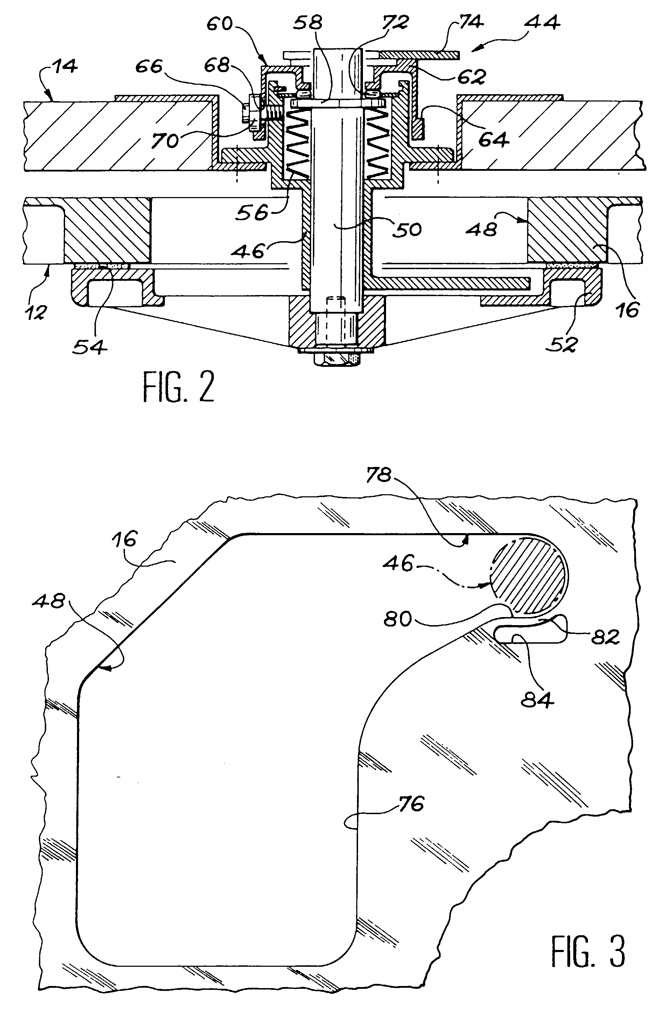

Ce fauteuil 10 comprend une embase fixe 12 ainsi qu'une assise 14 dont seule la partie centrale inférieure, dépourvue de sa garniture, apparaît sur la figure 2. Le terme "assise" désigne dans l'ensemble du texte la partie du fauteuil 10 prévue pour recevoir le passager dont la position et l'orientation peuvent être réglées par rapport à l'embase. Il est à noter que si la figure 1 représente un siège 10 comportant une embase 12 qui supporte une seule assise 14, l'invention s'applique également au cas d'un siège dont l'embase supporte simultanément plusieurs assises placées côte à côte.

Comme l'illustre plus précisément la figure 1, l'embase 12 du fauteuil 10 comprend un plateau supérieur 16, de forme rectangulaire, prévu pour être placé dans un plan sensiblement horizontal lorsque l'avion est au sol. Le plateau supérieur 16 comporte deux bords droits latéraux constitués par un bord de droite 18 et par un bord de gauche 20. Il comporte aussi un bord avant 22 et un bord arrière 24. Lorsque l'embase 12 est installée sur l'avion, les bords droits latéraux 18 et 20 sont orientés selon une direction sensiblement longitudinale par rapport à l'avion et les bords avant 22 et arrière 24 sont orientés selon une direction sensiblement transversale par rapport à l'avion.

De plus, l'embase 12 du fauteuil 10 comporte une première pièce inférieure 26, située en dessous du bord de droite 18 du plateau supérieur 16 et une deuxième pièce inférieure 28, située en dessous du bord de gauche 20 du plateau 16.

Les pièces inférieures 26 et 28 sont prévues pour être fixées sur une structure support qui peut être constituée soit directement par le plancher de l'avion, soit par des rails 30 fixés sur ce plancher, comme on l'a illustré schématiquement en traits mixtes sur la figure 1. La fixation des pièces inférieures 26 et 28 de l'embase 12 sur le plancher ou sur les rails 30 est réalisée par une technique quelconque telle que le boulonnage, bien connue des spécialistes de la technique et qui ne fait pas partie de l'invention.

La première pièce inférieure 26 de l'embase 12 présente par exemple la forme d'un profilé à section en forme de U, qui s'étend selon une direction sensiblement longitudinale par rapport à l'avion, sur une longueur voisine de la longueur du plateau supérieur 16 dans cette même direction. De plus, le bord de droite 18 du plateau supérieur 16 comporte un rebord longitudinal 32 qui fait saillie vers le bas en direction de la première pièce 26 et dont le bord inférieur présente sensiblement, dans la direction longitudinale précitée, la forme d'un V évasé. Cet agencement permet de relier la partie inférieure du rebord longitudinal 32 à la première pièce inférieure 26 par un axe de pivotement 34. Cet axe de pivotement 34 est orienté selon une direction sensiblement transversale par rapport à l'avion, et il est situé préférentiellement sensiblement au centre de la première pièce inférieure 26. L'axe 34 définit ainsi un premier moyen d'articulation 36 entre le plateau supérieur 16 et la première pièce inférieure 26.

Du fait de la forme en V évasé du bord inférieur du rebord longitudinal 32 et de la forme sensiblement droite du bord supérieur de la pièce inférieure 26, un jeu 38 est délimité entre le rebord longitudinal 32 et la pièce 26. Ce jeu 38 autorise un pivotement prédéterminé (par exemple, d'au moins ± 10°) du plateau supérieur 16 autour de l'axe d'articulation 34.

La deuxième pièce inférieure 28 se présente sous la forme d'une plaque plane rectangulaire qui s'étend selon une direction sensiblement longitudinale par rapport à l'avion, approximativement sur toute la longueur du plateau supérieur 16 dans cette direction. De plus, elle est disposée sensiblement verticalement entre le rail 30 qui lui correspond et le bord de gauche 20 du plateau supérieur 16. Plus précisément, la deuxième pièce inférieure 28 comporte un bord inférieur droit par lequel elle est fixée sur le rail 30 correspondant et un bord supérieur droit qui est relié au bord de gauche 20 du plateau supérieur par un axe d'articulation 40. Cet axe d'articulation 40 est orienté selon une direction sensiblement longitudinale par rapport à l'avion et s'étend sensiblement sur toute la longueur du plateau 16 dans cette direction. L'axe d'articulation 40 définit un deuxième moyen d'articulation 42 reliant la deuxième pièce inférieure 28 au plateau supérieur 16.

Il est à noter qu'au lieu d'être situé au niveau du plateau supérieur 16, l'axe d'articulation 40 peut être placé à un niveau quelconque entre ce plateau 16 et le rail 30 correspondant sans sortir du cadre de l'invention.

Il ressort de la description qui précède que le plateau supérieur 16 qui supporte l'assise 14 du fauteuil 10 est monté sur les pièces 26 et 28 par deux axes 34 et 40 orthogonaux entre eux et orientés parallèlement au plateau supérieur 16. De plus, le moyen d'articulation 36 par lequel le plateau supérieur 16 est monté sur la première pièce inférieure 26 est placé sensiblement au sommet d'un triangle tel qu'un triangle isocèle dont le côté opposé est confondu avec l'axe d'articulation 40 du deuxième moyen d'articulation 42. En outre, les moyens d'articulation 36 et 42 sont situés à proximité de chacun des rails 30.

Grâce à cet agencement, si le plancher de l'avion subit un vrillage lors d'un accident, le plateau supérieur 16 ne subit pratiquement aucune déformation dans la mesure où le vrillage n'excède pas des angles de plus ou moins 10° dans les deux directions définies par les axes d'articulation 34 et 40. Cette absence de déformation du plateau supérieur 16 de l'embase, qui supporte l'assise 14 du siège, permet d'éviter que cette assise ne soit déformée ou désolidarisée lors de l'accident.

On décrira à présent, en se référant aux figures 2 et 3, les moyens de blocage débrayables par lesquels l'assise 14 du siège est montée sur le plateau supérieur 16 de l'embase 12.

Ces moyens de blocage débrayables, désignés de façon générale par la référence 44 sur la figure 2, comprennent un fourreau 46 fixé au centre de la partie basse de l'assise 14 et qui fait saillie vers le bas au travers d'une ouverture 48 formée dans le plateau supérieur 16 de l'embase 12. L'axe du fourreau 46 est orienté perpendiculairement au plan du plateau supérieur 16, c'est-à-dire selon une direction verticale.

Les moyens de blocage débrayables 44 comportent en outre une colonne 50 qui est montée dans le fourreau 46 de façon à pouvoir coulisser axialement à l'intérieur de ce dernier. A son extrémité inférieure, cette colonne 50 fait saillie au-delà du fourreau 46 et porte une plaque de freinage 52, par exemple en forme de coupelle. Cette plaque de freinage 52 est placée en dessous du plateau supérieur 16 de l'embase 12 et ses dimensions sont supérieures à celles de l'ouverture 48. Le plateau 52 est avantageusement muni, sur sa face supérieure plane, d'une garniture de friction 54 susceptible de venir engager directement par frottement la face inférieure plane du plateau supérieur 16 de l'embase 12.

La plaque de freinage 52 portant la garniture de friction 54 est normalement pressée contre la face inférieure du plateau supérieur 16 par des moyens élastiques constitués par exemple par un empilement de rondelles élastiques 56, comme le montre la figure 2.

De façon plus précise, l'empilement de rondelles élastiques 56 est placé sur la colonne 50, dans une partie supérieure de plus grand diamètre du fourreau 46, située au niveau de la partie basse de l'assise 14. L'extrémité basse de l'empilement de rondelles élastiques 56 est en appui contre un épaulement formé dans le fourreau 56, alors que l'extrémité haute de cet empilement est en appui contre une collerette 58 formée dans le haut de la colonne 50. De cette manière, une précontrainte est appliquée en permanence sur la colonne 50, tendant à déplacer celle-ci vers le haut, c'est-à-dire à presser la plaque de freinage 52 contre le plateau supérieur 16. Cette précontrainte est suffisamment élevée pour assurer normalement une immobilisation efficace de l'assise 14.

Pour permettre à un passager de régler la position et l'orientation de l'assise 14 par rapport à l'embase 12, les moyens de blocage débrayables 44 comportent en outre des moyens de commande par came désignés de façon générale par la référence 60 sur la figure 2.

Ces moyens de commande 60 comprennent une bague rotative 62 dont une partie interne repose sur la collerette 58 de la colonne 50 par une butée à billes ou à rouleaux 72. La bague 62 chevauche l'extrémité supérieure du fourreau 46 pour se prolonger vers le bas, à l'extérieur de ce fourreau, par une partie tubulaire. L'extrémité inférieure de cette partie tubulaire est munie, sur sa surface extérieure, d'un épaulement tourné vers le haut, formant une surface de came 64.

Dans le haut de sa partie supérieure située à l'intérieur de la partie extérieure tubulaire de la bague 62, le fourreau 46 supporte une vis 66, orientée radialement vers l'extérieur. Cette vis 66 traverse une fente 68 formée dans la partie extérieure tubulaire de la bague 62. La fente 68 s'étend circonférentiellement sur la partie extérieure tubulaire de la bague 62, de façon à autoriser une rotation de la bague 62 autour de son axe vertical sur un angle prédéterminé. A l'extérieur de la partie extérieure tubulaire de la bague 62, la vis 66 supporte un galet 70 situé en regard de la surface de came 64.

Dans la position normale de blocage des moyens de blocage débrayables 44, le galet 70 est situé au-dessus de la partie la plus basse de la surface de came 64.

L'empilement de rondelles élastiques 56 maintient alors la bague 62 dans une position telle qu'il existe entre le galet 70 et la surface de came 64 un jeu vertical limité. Cette position est déterminée par la venue en appui de la plaque de freinage 52 contre le plateau supérieur 16.

Un levier horizontal 74, solidaire de la bague 62, est relié par un câble (non représenté) à un organe de commande de déverrouillage (non représenté). Lorsque la personne qui occupe le fauteuil actione cet organe de commande, celui-ci commande une rotation de la bague 62 par l'intermédiaire du câble et du levier 74. La rotation de la bague 62 a pour effet de faire parcourir la surface de came 64 par le galet 70. Il en résulte un déplacement vers le bas de la bague 62, par rapport au fourreau 46 et à l'assise 14. Ce déplacement de la bague 62 a pour effet de repousser vers le bas la colonne 50 et la plaque de freinage 52 qu'elle supporte, par l'intermédiaire de la butée à billes 72. Ce déplacement, qui s'effectue à l'encontre de l'action de l'empilement de rondelles élastiques 56, est suffisant pour dégager la garniture de friction 54 portée par la plaque de freinage 52 de la face inférieure du plateau supérieur 16. Par conséquent, la personne qui occupe le siège peut déplacer et orienter celui-ci librement dans les limites fixées par l'ouverture 48 formée dans le plateau supérieur 16 de l'embase 12.

Selon un agencement particulièrement avantageux illustré sur la figure 3, l'ouverture 48 formée dans le plateau supérieur 16 comporte, en plus d'une partie principale de réglage 76 de forme approximativement carrée ou rectangulaire, un appendice 78 qui prolonge latéralement la partie principale de réglage 76 le long de ce bord arrière. Dans sa partie terminale, cet appendice comporte un bord avant 80 orienté selon une direction sensiblement transversale par rapport à l'avion. Le bord arrière de l'ouverture 48, commun à la partie principale de réglage 76 et à l'appendice 78, est orienté selon la même direction au moins dans sa partie formant l'appendice 78. En outre, l'écartement entre le bord avant 80 de l'appendice 78 et la partie du bord arrière de l'ouverture 48 parallèle à ce bord avant est sensiblement égal, au jeu fonctionnel près, au diamètre extérieur présenté par le fourreau 46 au niveau du plateau supérieur 16.

Par conséquent, lorsque le fourreau 46 est reçu dans le fond semi-circulaire de l'appendice 78, comme on l'a illustré en traits mixtes sur la figure 3, il définit pour l'assise 14 du siège une position stable. Cette position permet d'empêcher tout déplacement relatif de cette assise vers l'avant ou vers l'arrière par rapport à l'embase 12 du siège, même en cas de choc suffisamment important pour risquer d'interrompre la liaison par frottement entre la plaque de freinage 52 et le plateau supérieur 16.

Comme l'illustre la figure 3, ce dispositif est avantageusement complété par la réalisation, sur le bord avant 80 de l'appendice 78, d'une zone 82 de moindre résistance, autorisant un encastrement limité du fourreau dans ce bord avant, en cas de choc de l'avion contre un obstacle.

Dans la forme de réalisation représentée, cette zone de moindre résistance est constituée par une cloison 82, d'épaisseur limitée, séparant le bord avant 80 de l'appendice 78 d'une lumière 84 traversant le plateau supérieur 16, à l'avant de l'appendice 78.

Lorsque la colonne 46 est placée dans le fond de l'appendice 78 comme on l'a représenté en traits mixtes sur la figure 3, l'axe de cette colonne se trouve pratiquement au centre du plateau supérieur 16 de l'embase 12. L'embase 14 du siège doit impérativement être placée dans cette position dans les périodes de risque maximum, c'est-à-dire notamment au décollage et à l'atterrissage de l'avion. Dans ces conditions, si un choc frontal se produit, les forces d'inertie appliquées sur l'assise 14 du siège tendent à déplacer celle-ci brutalement vers l'avant, ce qui conduit à la rupture de la cloison 82 et à l'encastrement du fourreau 46 dans le logement alors formé dans le bord avant de l'appendice 78 par la lumière 84. Un maintien en position de l'assise du siège est ainsi assuré.

Il est à noter que la structure de l'embase 12, décrite principalement en se référant à la figure 1, ainsi que la configuration de l'ouverture 48 qui vient d'être décrite principalement en se référant à la figure 3, contribuent l'une et l'autre à préserver l'intégrité du siège et de son occupant en cas de choc violent pouvant conduire à un vrillage du plancher.

Bien entendu, lorsque les moyens de blocage débrayables par lesquels l'assise du siège est montée sur son embase, sont différents de ceux qui ont été décrits en se référant notamment à la figure 2, on peut utiliser une embase conçue de la manière qui a été décrite en se référant à la figure 1, sans que les dispositions décrites par ailleurs en se référant à la figure 3 soient nécessaires.

## Revendications

1. Siège orientable pour véhicule, comprenant :
- une embase (12) pourvue d'un plateau supérieur (16) et d'au moins une pièce inférieure (26,28) portant le plateau supérieur et prévue pour être fixée à une structure support (30) du véhicule ;
- au moins une assise (14) reposant sur le plateau supérieur de l'embase ; et
- des moyens de blocage débrayables (44) par lesquels l'assise est normalement immobilisée sur l'embase et dont un actionnement autorise des déplacements de l'assise parallèlement au plateau supérieur ;
caractérisé par le fait que l'embase (12) comprend au moins deux pièces inférieures (26,28) respectivement reliées au plateau supérieur (16) par des moyens d'articulation (36,42) définissant deux axes d'articulation (34,40) sensiblement orthogonaux entre eux, orientés parallèlement au plateau supérieur, un premier (36) de ces moyens d'articulation, qui définit un premier des axes (34) d'articulation, étant placé sensiblement au sommet d'un triangle dont le côté opposé est confondu avec le deuxième axe d'articulation (40).

2. Siège selon la revendication 1, caractérisé par le fait que le premier axe d'articulation (34) est orienté selon une direction sensiblement transversale par rapport au véhicule et le deuxième axe d'articulation (40) est orienté selon une direction sensiblement longitudinale par rapport au véhicule.

3. Siège selon la revendication 2, caractérisé par le fait que le plateau supérieur (16) comporte deux bords droits latéraux (18,20), orientés selon ladite direction sensiblement longitudinale, un premier (18) de ces bords étant relié à une première (26) des pièces inférieures par le premier moyen d'articulation (36), et le deuxième bord (20) du plateau supérieur étant relié à la deuxième pièce inférieure (28) par le deuxième moyen d'articulation (42).

4. Siège selon la revendication 3, caractérisé par le fait que le premier bord droit latéral (18) du plateau supérieur (16) comporte un rebord longitudinal (32) en saillie vers le bas, par lequel ce premier bord droit est relié à la première pièce inférieure (26) au travers du premier moyen d'articulation (36), la première pièce inférieure (26) étant placée en dessous du rebord longitudinal (32) en délimitant avec ce dernier un jeu (38) qui autorise un pivotement prédéterminé du plateau supérieur (16) autour du premier axe d'articulation (34).

5. Siège selon l'une quelconque des revendications 3 et 4, caractérisé par le fait que la deuxième pièce inférieure (28) comporte un bord supérieur droit, orienté selon ladite direction sensiblement longitudinale et relié au deuxième bord droit latéral (20) du plateau supérieur (16) par le deuxième moyen d'articulation (42).

6. Siège selon l'une quelconque des revendications précédentes, caractérisé par le fait que, la structure support comportant deux rails (30) parallèles, chacun des moyens d'articulation (36,42) est placé à proximité de l'un de ces rails.

7. Siège selon l'une quelconque des revendications précédentes, caractérisé par le fait que les moyens de blocage débrayables (44) comprennent :
- un fourreau (46) solidaire de l'assise (14) et faisant saillie vers le bas au travers d'une ouverture (48) formée dans le plateau supérieur (16) ;
- une colonne (50) montée coulissante dans le fourreau (46) ;
- une seule plaque de freinage (52) solidaire d'une extrémité basse de la colonne, en dessous du plateau supérieur ;
- des moyens élastiques (56) interposés entre le fourreau (46) et la colonne (50), de façon à presser directement la plaque de freinage contre une face inférieure du plateau supérieur (16) ; et
- des moyens de commande (60) par came, dont un actionnement déplace la colonne (50) vers le bas dans le fourreau (46), à l'encontre des moyens élastiques (56).

8. Siège selon la revendication 7, caractérisé par le fait que l'ouverture (48) formée dans le plateau supérieur (16) comporte une partie principale de réglage (76), prolongée latéralement, le long d'un bord arrière par un appendice (78) comportant un bord avant (80) orienté selon une direction sensiblement transversale par rapport au véhicule.

9. Siège selon la revendication 8, caractérisé par le fait que le bord avant (80) de l'appendice comporte une zone de moindre résistance (82) autorisant un encastrement du fourreau dans le bord avant, en cas de choc du véhicule contre un obstacle.

10. Siège selon la revendication 9, caractérisé par le fait que la zone de moindre résistance comprend une cloison (82) séparant le bord avant (80) de l'appendice d'une lumière (84) traversant le plateau supérieur (16), à l'avant de l'appendice.

11. Siège selon l'une quelconque des revendications précédentes, caractérisé par le fait que le véhicule est un aéronef.

## Patentansprüche

1. Drehbarer Sitz für ein Fahrzeug, umfassend:
- einen Sockel (12), versehen mit einer Deckplatte (16) und wenigstens einem Unterteil (26,28), das die Deckplatte trägt und vorgesehen ist, auf einer Tragstruktur (30) des Fahrzeugs befestigt zu werden;
- wenigstens einen Sitz (14), der auf der Deckplatte des Sockels ruht; und
- auskuppelbare Blockierungseinrichtungen (44), durch die der Sitz normalerweise auf dem Sockel arretiert wird und deren Betätigung Verschiebungen des Sitzes parallel zu der Deckplatte ermöglicht;
**dadurch gekennzeichnet**,
dass der Sockel (12) wenigstens zwei Unterteile (26,28) umfaßt, mit der Deckplatte (16) jeweils durch Gelenkeinrichtungen (36,42) verbunden, die zwei im wesentlichen rechtwinklig zueinander angeordnete Gelenkachsen (34,40) definieren, die parallel zu der Deckplatte ausgerichtet sind, wobei eine erste (36) dieser Gelenkeinrichtungen, die eine erste (34) der Gelenkachsen definiert, sich im wesentlichen an der Spitze eines Dreiecks befindet, dessen entgegengesetzte Seite mit der zweiten Gelenkachse (40) zusammenfällt.

2. Sitz nach Anspruch 1, dadurch gekennzeichnet, dass die erste Gelenkachse (34) in Bezug auf das Fahrzeug im wesentlichen in Querrichtung verläuft und die zweite Gelenkachse (40) in Bezug auf das Fahrzeug im wesentlichen in Längsrichtung verläuft.

3. Sitz nach Anspruch 2, dadurch gekennzeichnet, dass die Deckplatte (16) zwei im wesentlichen in der genannten Längsrichtung verlaufende geradlinige Seitenränder (18,20) aufweist, wobei ein erster (18) dieser Ränder durch die erste Gelenkeinrichtung (36) mit einem ersten (26) der Unterteile verbunden ist, und der zweite Rand (20) der Deckplatte durch die zweite Gelenkeinrichtung (42) mit dem zweiten Unterteil (28) verbunden ist.

4. Sitz nach Anspruch 3, dadurch gekennzeichnet, dass der erste geradlinige Seitenrand (18) der Deckplatte (16) in Längsrichtung eine nach unten vorstehende Randleiste aufweist, durch die dieser erste geradlinige Rand durch die erste Gelenkeinrichtung (36) mit dem ersten Unterteil (26) verbunden ist, wobei das erste Unterteil (26) sich unter der längsgerichteten Randleiste (32) befindet und mit dieser letzteren ein Spiel (38) definiert, das ein vorher festgelegtes Schwenken der Deckplatte (16) um die erste Gelenkachse (34) ermöglicht.

5. Sitz nach einem der Ansprüche 3 und 4, dadurch gekennzeichnet, dass das zweite Unterteil (28) einen geradlinigen oberen Rand umfaßt, der entsprechend der genannten Längsrichtung verläuft und mit dem zweiten geradlinigen Seitenrand (20) der Deckplatte (16) durch die zweite Gelenkeinrichtung (42) verbunden ist.

6. Sitz nach einem der vorangehenden Ansprüche, dadurch gekennzeichnet, dass die Tragstruktur zwei parallele Schienen (30) umfaßt und jede der Gelenkeinrichtungen (36,42) sich in der Nähe einer dieser Schienen befindet.

7. Sitz nach einem der vorangehenden Ansprüche, dadurch gekennzeichnet, dass die auskuppelbaren Blockiereinrichtungen (44) umfassen:
- eine Hülse (46), fest mit dem Sitz (14) verbunden und nach unten vorstehend, durch eine in der Deckplatte (16) ausgebildete Öffnung (48) hindurch;
- eine gleitend in die Hülse (46) montierte Stütze (50);
- eine einzige Bremsplatte (52), fest mit einem unteren Ende der Stütze verbunden, unterhalb der Deckplatte;
- elastische Einrichtungen (56), eingefügt zwischen die Hülse (46) und die Stütze (50), um die Bremsplatte direkt gegen eine untere Fläche der Deckplatte (16) zu pressen; und
- Nocken-Steuereinrichtungen (60), deren Betätigung die Stütze (50) in der Hülse (46) nach unten verschiebt, gegen die elastischen Einrichtungen (56).

8. Sitz nach Anspruch 7, dadurch gekennzeichnet, dass die Öffnung (48), ausgebildet in der Deckplatte (16), einen Verstellungs-Hauptteil (76) umfaßt, und einen seitlichen Ansatz (78) längs eines hinteren Randes, sowie einen vorderen Rand (80), der in Bezug auf das Fahrzeug im wesentlichen in Querrichtung verläuft.

9. Sitz nach Anspruch 8, dadurch gekennzeichnet, dass der vordere Rand (80) des Ansatzes eine Zone geringeren Widerstands (82) umfaßt, so dass im Falle eines Zusammenstoßes des Fahrzeugs mit einem Hindernis die Hülse sich in den vorderen Rand hineinsenken kann.

10. Sitz nach Anspruch 9, dadurch gekennzeichnet, dass die Zone geringeren Widerstands eine Wand (82) umfaßt, die den vorderen Rand (80) des Ansatzes von einem Langloch (84) trennt, das vor dem Ansatz die Deckplatte (16) durchquert.

11. Sitz nach einem der vorangehenden Ansprüche, dadurch gekennzeichnet, dass das Fahrzeug ein Luftfahrzeug ist.

## Claims

1. Adjustable seat for a vehicle comprising:
- a baseplate (12) provided with a top plate (16) and at least one lower component (26, 28) carrying the top plate and intended to be fixed to a support structure (30) of the vehicle;
- at least one seat bed (14) resting on the top plate of the baseplate; and
- releasable locking means (44) by which the seat bed is normally immobilized on the baseplate and an actuation of which allows movements of the seat bed parallel to the top plate;
characterized by the fact that the baseplate (12) includes at least two lower components (26, 28) respectively attached to the top plate (16) by hinged joint means (36, 42) defining two hinge pins (34, 40) approximately at right angles to each other, oriented parallel to the top plate, a first (36) of these hinged joint means, which defines a first of the hinge pins (34) being positioned substantially at the apex of a triangle, the opposite side of which is coincident with the second hinge pin (40).

2. Seat according to claim 1, characterized by the fact that the first hinge pin (34) is oriented in a substantially transverse direction with respect to the vehicle and the second hinge pin (40) is oriented in a substantially longitudinal direction with respect to the vehicle.

3. Seat according to claim 2, characterized by the fact that the top plate (16) has two straight lateral edges (18, 20) oriented in said substantially longitudinal direction, a first (18) of these edges being attached to a first (26) of the lower components by the first hinged joint means (36) and the second edge (20) of the top plate being attached to the second lower component (28) by the second hinged joint means (42).

4. Seat according to claim 3, characterized by the fact that the first straight lateral edge (18) of the top plate (16) has a longitudinal flange (32) projecting downwards, by which this first straight edge is attached to the first lower component (26) through the first hinged joint means (36), the first lower component (26) being positioned below the longitudinal flange (32) defining with the latter a gap (38) which allows a predetermined degree of pivoting of the top plate (16) around the first hinge pin (34).

5. Seat according to any one of claims 3 and 4, characterized by the fact that the second lower component (28) has a straight upper edge, oriented in said substantially longitudinal direction and attached to the second straight lateral edge (20) of the top plate (16) by the second hinged joint means (42).

6. Seat according to any one of the preceding claims, characterized by the fact that the support structure comprises two parallel rails (30), each of the hinged joint means (36, 42) is positioned close to one of these rails.

7. Seat according to any one of the preceding claims, characterized by the fact that the releasable locking means (44) include:
- a barrel (46) rigidly fixed to the seat bed (14) and projecting downwards through an opening (48) formed in the top plate (16);
- a pillar (50) slidably mounted within the barrel (46);
- a single brake plate (52) integral with a bottom end of the pillar, below the top plate;
- resilient means (56) positioned between the barrel (46) and the pillar (50) in such a way that the brake plate is pressed directly against a lower face of the top plate (16); and
- cam control means (60), an actuation of which displaces the pillar (50) downwards in the barrel (46), in opposition to the elastic means (56).

8. Seat according to claim 7, characterized by the fact that the opening (48) formed in the top plate (16) has a main adjustment part (76), extended laterally, along a back edge by an appendage (78) having a front edge (80) oriented in a substantially transverse direction with respect to the vehicle.

9. Seat according to claim 8, characterized by the fact that the front edge (80) of the appendage has a zone of least resistance (82) which allows embedding of the barrel in the front edge in the event of impact of the vehicle against an obstacle.

10. Seat according to claim 9, characterized by the fact that the zone of least resistance includes a partition (82) separating the front edge (80) of the appendage from an aperture (84) through the top plate (16) at the front of the appendage.

11. Seat according to any one of the preceding claims, characterized by the fact that the vehicle is an aircraft.
